# FASCICULE DE BREVET EUROPEEN

(11) **EP 4 161 697 B1**
(45) Date de publication et mention de la délivrance du brevet: **06.05.2026**
(21) Numéro de dépôt: 21734426.6
(22) Date de dépôt: 01.06.2021
(51) Int. Cl.: B01L 1/02, B25J 21/00

(54) **BRIDE POUR CONTENEUR DE TRANSFERT ETANCHE**
FLANSCH FÜR EINEN DICHTEN ÜBERTRAGUNGSBEHÄLTER
FLANGE FOR A SEALED TRANSFER CONTAINER

(30) Priorité: 04.06.2020 FR 2005843
(43) Date de publication de la demande: 12.04.2023
(73) Titulaire: Getinge Life Science France, 41100 Vendôme (FR)
(72) Inventeur: BELIN, Jean, 41360 LUNAY (FR)
(74) Mandataire: Santarelli
(86) Numéro de dépôt international: PCT/FR2021/050989
(87) Numéro de publication internationale: WO 2021/245347

(56) Documents cités:
- EP-A1- 0 662 373
- WO-A1-2017/109420
- US-A- 5 447 699

## Description

### DOMAINE TECHNIQUE ET ÉTAT DE LA TECHNIQUE ANTÉRIEURE

La présente invention se rapporte à une bride pour conteneur de transfert étanche particulièrement adaptée pour une connexion étanche, le conteneur est par exemple un sac de transfert étanche.

Dans un certain nombre de secteurs industriels, parmi lesquels on citera les secteurs nucléaire, médical, pharmaceutique et agroalimentaire, il est nécessaire ou souhaitable d'effectuer certaines tâches dans une atmosphère confinée, soit afin de protéger l'environnement, par exemple de la radioactivité, de la toxicité..., soit au contraire de pouvoir effectuer ces tâches dans une atmosphère aseptique ou exempte de poussière, soit enfin les deux simultanément.

Le transfert d'appareils ou de produits d'un volume clos à l'autre, sans qu'à aucun moment l'étanchéité de chacun de ces volumes vis-à-vis de l'extérieur ne soit rompue, pose un problème délicat à remplir. Ce problème peut être résolu par un dispositif de connexion à double porte.

Un tel dispositif à double porte muni d'une commande à multiple sécurités est par exemple connu du document FR 2 695 343. Chaque volume est clos par une porte montée dans une bride. Chaque porte est solidarisée à sa bride soit par une liaison baïonnette, soit par une charnière et un système de verrouillage et les deux brides sont destinées à être solidarisés l'une à l'autre par une liaison baïonnette.

Par exemple l'un des volumes clos est formé par un isolateur et l'autre volume est formé par un conteneur souple ou sac de transfert étanche.

Classiquement la partie de connexion portée par l'isolateur est désignée partie alpha et la partie de connexion portée par le conteneur est désignée partie bêta.

Des joints sont prévus sur la partie alpha et sur la partie bêta pour assurer l'étanchéité entre les volumes connectés.

De tels sacs sont habituellement destinés au transfert stérile de petits composants tels que bouchons, pistons de seringue, flacons plastiques, etc. sur les lignes de remplissage de l'industrie pharmaceutique.

La connexion entre le sac de transfert et l'enceinte s'effectue par coopération mécanique de la bride bêta et de la bride alpha, par exemple par une liaison de type baïonnette. Cette coopération mécanique assure l'étanchéité de la connexion. Généralement la bride de l'enceinte est en acier inoxydable. Afin de garantir cette étanchéité, la bride bêta doit offrir une résistance mécanique suffisante.

Le polyéthylène est couramment utilisé pour fabriquer les brides bêta, car il permet notamment de souder directement sur la bride le matériau formant le contenant souple du sac.

Or le polyéthylène présente un faible module d'Young, ce qui implique de réaliser des brides présentant une certaine épaisseur pour obtenir la résistance mécanique requise, voire d'inclure une charge, par exemple des fibres de verre.

Le document EP 0 662 373 décrit un autre example de bride de l'art antérieur.

### EXPOSÉ DE L'INVENTION

C'est par conséquent un but de la présente invention d'offrir une bride pour conteneur de transfert étanche pour connexion étanche à une installation présentant une résistance mécanique suffisante tout en permettant une réalisation de sac relativement simple.

Le but énoncé ci-dessus est atteint par une bride de connexion pour conteneur de transfert étanche comportant au moins du polymère d'oléfine cyclique.

Par exemple, le matériau de la bride peut comporter du polymère d'oléfine cyclique et du polyéthylène haute densité.

La mise en œuvre de polymère d'oléfine cyclique dans le matériau de la bride permet d'offrir un matériau ayant un module d'Young supérieur à celui du polyéthylène haute densité seul. Pour une même épaisseur, la résistance mécanique de la bride est augmentée par rapport à une bride en polyéthylène haute densité ou l'épaisseur de la bride peut être réduite et offrir la même résistance mécanique, ce deuxième point est avantageux pour la transformation des matières plastiques par moulage, et particulièrement par injection plastique.

En outre la bride est réalisée au moins en partie par moulage. Le fait d'utiliser un matériau comportant du polymère d'oléfine cyclique pour le moulage limite le retrait et la déformation au refroidissement. Le procédé de fabrication est mieux maîtrisé.

Le matériau de la bride comporte au moins 50% en masse de polymère d'oléfine cyclique, le matériau présente alors une tenue en température améliorée, ce qui le rend particulièrement adapté pour des stérilisations par autoclavage. De plus le matériau est également compatible avec une stérilisation par rayons gamma. Il est alors possible de n'avoir plus qu'une seule bride et une seule porte pour la stérilisation par irradiation gamma et la stérilisation par autoclavage.

En outre, cette bride peut être soudée directement sur des films en polyéthylène haute densité, ce qui la rend particulièrement adaptée à la fabrication de sacs de transfert étanche. La réalisation de sacs de transfert souple est alors sensiblement simplifiée comparativement à celle des sacs souples de l'état de la technique adaptés à l'autoclavage.

L'un des objets de la présente demande est alors une bride pour conteneur de transfert étanche, la bride comportant un corps muni d'une première extrémité comprenant des moyens de connexion étanche destinés à coopérer avec un dispositif de transfert étanche, et d'une deuxième extrémité destinée à être connectée de manière étanche à un contenant, ledit corps étant réalisé en un matériau comportant au moins 50 % en masse de polymère d'oléfine cyclique.

Dans un exemple, le matériau comporte du polymère d'oléfine cyclique et du polyéthylène haute densité, ou du polymère d'oléfine cyclique et du polypropylène.

Par exemple, les moyens de connexion sont de type à baïonnette.

Un autre objet de la présente demande est un ensemble de connexion étanche pour conteneur de transfert comportant une bride selon de la présente demande, une porte amovible montée dans la bride et un joint monté sur la bride, le joint étant configuré pour assurer l'étanchéité entre la bride et la porte et entre la bride et le dispositif de transfert étanche.

De préférence, la porte est réalisée avec le même matériau que celui de la bride.

Un autre objet de la présente demande est un conteneur de transfert étanche comportant un ensemble de connexion étanche selon la présente demande, et un contenant fixé de manière étanche sur la deuxième extrémité de la bride.

Par exemple, le contenant comporte une enveloppe souple soudée sur la deuxième extrémité de la bride.

Dans un exemple de réalisation, l'enveloppe comporte un film comportant au moins une couche en polyéthylène, ladite couche en polyéthylène étant soudée sur la deuxième extrémité de la bride.

L'enveloppe peut comprendre une paroi en un film comportant au moins une couche en polyéthylène, et une paroi en un matériau perméable à la vapeur, tel qu'un textile non tissé de fibres de polyéthylène haute densité, la paroi en un film comportant au moins une couche en polyéthylène étant soudée sur la deuxième extrémité de la bride.

En variante, le contenant comporte une enveloppe en polyuréthane, et dans lequel une interface comportant une couche de polyéthylène et une couche de polyuréthane est disposée entre la bride et le contenant, de sorte que la couche en polyéthylène se trouve soudée sur la deuxième extrémité de la bride et la couche en polyuréthane se trouve soudée sur l'enveloppe.

L'enveloppe peut s'étendre selon un axe longitudinal entre un fond fermé ou un fond ouvert et une ouverture et dans lequel les bords de l'ouverture sont soudés sur la bride dans l'axe. L'enveloppe peut être formée par deux feuilles soudées bord à bord sauf au niveau de l'ouverture, les parties des deux feuilles délimitant l'ouverture étant soudées sur la bride.

### BRÈVE DESCRIPTION DES DESSINS

La présente invention sera mieux comprise sur la base de la description qui va suivre et des dessins en annexe sur lesquels:
La figure 1A est une vue en coupe longitudinale illustrant schématiquement le raccordement d'un sac de transfert sur une cellule au moyen d'un dispositif de transfert étanche à double porte par des moyens de type baïonnette,
La figure 1B est une représentation de la partie bêta seule en éclaté
La figure 2 est une représentation graphique de la variation du module d'Young d'un matériau en fonction de la composition en polymère d'oléfine cyclique et en polyéthylène haute densité,
La figure 3 est une représentation graphique de la variation du module de cisaillement en fonction de la température pour le polyéthylène haute densité et le polymère d'oléfine cyclique,
La figure 4 est une représentation schématique d'un exemple de sac de transfert pouvant mettre en œuvre une bride selon l'invention,
La figure 5 est une représentation schématique d'un autre exemple de sac de transfert pouvant mettre en œuvre une bride selon l'invention.

### EXPOSÉ DÉTAILLÉ DE MODES DE RÉALISATION PARTICULIERS

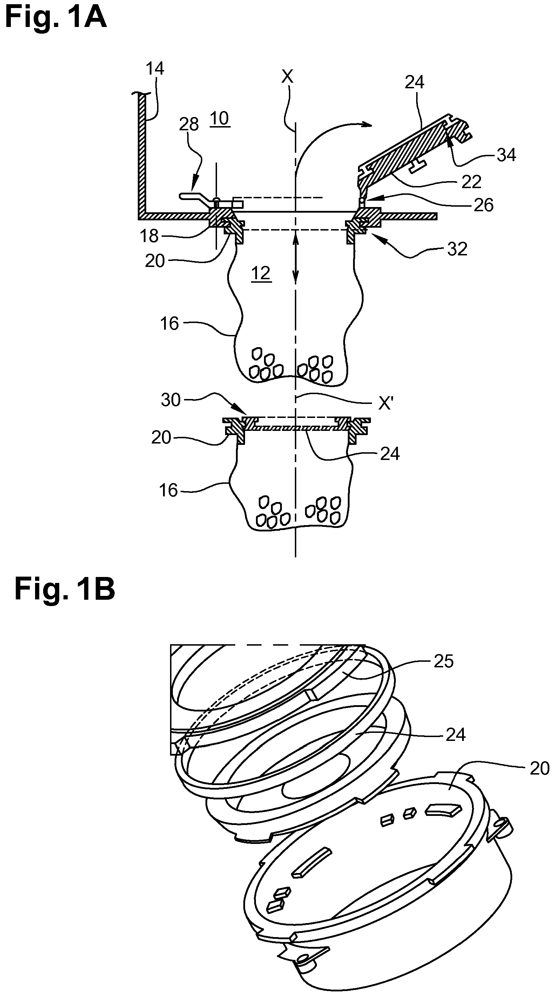

Sur la figure 1A, on peut voir une représentation schématique d'un système de transfert étanche à double porte dans lequel un sac de transfert souple selon l'invention peut être mis en œuvre.

Dans la description qui va suivre les deux volumes clos dont on souhaite tester l'étanchéité avant leur connexion correspondent respectivement à un isolateur 10 et à un conteneur souple 12. On comprendra cependant que l'invention est aussi applicable dans le cas où les volumes clos seraient de manière non limitative par exemple pour l'un une boîte à gant et pour l'autre un conteneur ou une boîte à gants.

L'isolateur 10 est délimité par une paroi 14 dont une partie seulement est visible sur la figure 1A. Il est équipé, de façon classique, par exemple de moyens de manipulation à distance tels que des télémanipulateurs et/ou des gants (non représentés) solidaires de la paroi 14, grâce auxquels le mécanisme de commande centralisé peut être manœuvré depuis l'intérieur de cette cellule 10. Le conteneur 12 est également délimité par une paroi 16, comme l'illustre notamment la figure 1A. La paroi 16 est formée par un sac souple, par exemple obtenu en soudant par leurs bords deux morceaux de films, par exemple de forme rectangulaire. Le sac comporte une extrémité ouverte fixée de manière étanche sur la bride.

Le dispositif de transfert étanche à double porte comprend principalement une bride d'isolateur 18, une bride de conteneur 20, une porte d'isolateur 22 obturant normalement une ouverture circulaire délimitée par la bride d'isolateur 18, et une porte de conteneur 25 obturant normalement une ouverture délimitée par la bride de conteneur 20. La bride d'isolateur 18 et la bride de conteneur 20 sont fixées respectivement sur la paroi 14 de la cellule 10 et sur la paroi 16 du conteneur 12. Dans cet exemple, la porte de l'isolateur 22 est articulée sur la bride d'isolateur 18 par une charnière 26.

Des moyens désignés de façon générale par la référence 28, permettent de commander l'ouverture et la fermeture des portes 22 et 25.

Par exemple, la fixation de la porte de conteneur 25 sur la bride de conteneur 20 est assurée par une liaison à baïonnette 30 comme cela est décrit dans le document FR 2 695 343. Par exemple, pour permettre la solidarisation de la bride de conteneur 20 sur la bride d'isolateur 18 et la solidarisation de la porte de conteneur 25 sur la porte d'isolateur 22, le système de transfert étanche à double porte comprend également deux autres liaisons à baïonnette désignées respectivement par les références 32 et 34. Les trois liaisons à baïonnette 30, 32 et 34 sont agencées de telle sorte qu'après accostage de la bride de conteneur 20 sur la bride d'isolateur 18, une rotation du conteneur 12 autour de son axe, par exemple dans le sens des aiguilles d'une montre, a pour effet de solidariser la bride de conteneur 20 et la bride d'isolateur 18, de solidariser la porte de conteneur 25 et la porte d'isolateur 22, et de désolidariser la porte de conteneur 25 de la bride de conteneur 20. Ces deux dernières opérations s'effectuent de façon consécutive, de telle sorte que l'ouverture du conteneur n'intervient qu'après que la porte de conteneur 25 ait été solidarisée à la porte d'isolateur 22 pour former une double porte.

L'ensemble formé par la bride d'isolateur et la porte d'isolateur est désigné couramment « partie alpha ».

L'ensemble formé par la bride de conteneur 20, la porte du conteneur 25 et le joint 24 monté sur la bride et qui assure à la fois l'étanchéité entre la bride et la porte et entre la bride et le dispositif de transfert étanche est désigné couramment « partie bêta ». Cet ensemble est représenté sur la figure 1B.

En général le système de transfert à double porte présente une symétrie de révolution autour de l'axe X qui est l'axe de la bride d'isolateur.

Selon la présente invention, au moins la bride du sac de transfert est réalisée en un matériau comportant du polymère d'oléfine cyclique ou COC (Cyclic Olefin Copolymer en terminologie anglo-saxonne). De préférence, la porte 25 de la partie bêta est également fabriquée en un matériau comportant du polymère d'oléfine cyclique, et de manière encore plus préférée la bride 20 et la porte 25 sont réalisées dans le même matériau comportant du polymère d'oléfine cyclique.

A des fins de simplicité, le polymère d'oléfine cyclique sera désigné dans la suite de la description par COC.

Le copolymère d'oléfine cyclique ou COC est un polymère amorphe ; il est par exemple commercialisé sous le nom TOPAS^{®}, dont les grades 6013, 6015, 6017 ont été déterminés comme avantageusement adaptés à la bride selon l'invention. Le choix du grade dépend de la tenue en température, la transformabilité, la tenue mécanique.

Le matériau de la bride peut comporter en mélange du COC et du polyéthylène haute densité (PEHD), ou du COC et du polypropylène.

Dans la suite de la description, le matériau considéré, sauf mention particulière comporte du COC et du PEHD, ou du COC et du polypropylène.

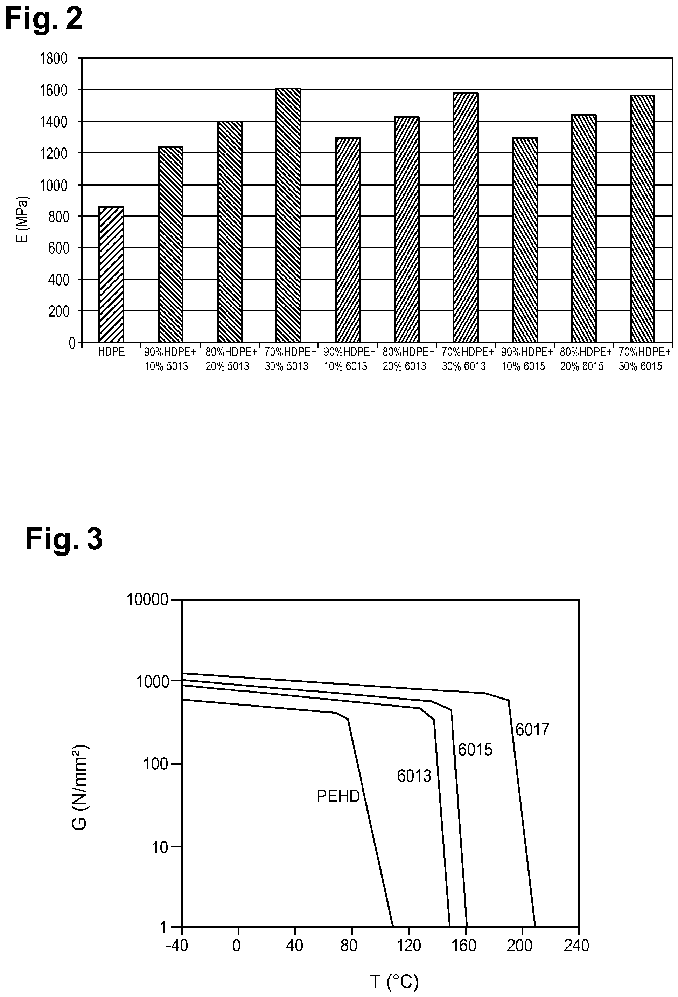

Le matériau comportant du COC grade 6013 et du PEHD offre un module d'Young E supérieur à celui du PEHD comme le montre la figure 2 représentant la variation du module d'Young E en MPa en fonction de la composition massique en COC et en PEHD.

On constate qu'avec 10% de COC et 90 % de PEHD le module d'Young du matériau est augmenté d'environ 50% en comparaison du PEHD pur.

Le mélange COC - polypropylène présente un module d'Young plus élevé que le polypropylène seul, en outre il présente une résistance à la température augmentée, i.e. un retrait réduit lors d'une phase de stérilisation à la vapeur.

La bride selon l'invention présente alors une résistance mécanique augmentée par rapport aux brides de l'état de la technique, ce qui peut permettre de réduire l'épaisseur de matériau requis. La quantité de matériau pour la fabrication est alors réduite, ainsi que la masse de la bride, ce qui est particulièrement avantageux car les sacs de transfert sont en général manipulés à la main par des opérateurs. De plus la mise en œuvre d'un tel matériau permet de ne plus recourir à des matériaux chargés, par exemple en fibres de verre afin qu'ils présentent la résistance mécanique souhaitée. Le risque d'émission de particules par la bride dans le sac est donc sensiblement réduit.

En outre, le matériau de la bride offre un retrait réduit lors du moulage. Le procédé de fabrication est mieux contrôlé.

Par ailleurs, la bride selon l'invention est avantageusement compatible avec une soudure directe avec le ou les matériaux du contenant souple.

Le contenant souple est par exemple fabriqué à partir de films tri-couches polyéthylène/EVOH (éthylène alcool vinylique)/polyéthylène, ou d'un film en PEHD, ou en polyuréthane.

Lorsque la bride est en COC pur ou en COC et PEHD, un contenant en tri-couche polyéthylène/EVOH/polyéthylène ou en PEHD peut être soudé sur la bride.

Lorsque la bride est en COC ou en COC et PEHD, et le contenant souple est en polyuréthane, on utilise une interface formée d'un film bicouche polyéthylène/polyuréthane permettant à la fois la soudure sur la bride via la couche en polyéthylène, et sur le contenant souple en polyuréthane via la couche en polyuréthane.

Dans le cas d'une bride en COC et polypropylène, on peut par exemple souder sur celle-ci un sac en polyéthylène en interposant entre la bride et le sac un film bicouche PE/PP, ou un sac formé avec un film bicouche PE/PP ; le sac en polyéthylène peut aussi être soudé directement sur la bride en COC et polypropylène car le polyéthylène est compatible avec le COC.

Dans un autre exemple, le contenant souple est réalisé avec un film comprenant du COC.

Le matériau de la bride comporte au moins 50% de COC, ce qui lui confère une tenue à la température améliorée notamment en comparaison du PEHD seul ou du polypropylène seul, ce qui le rend adapté à une stérilisation par autoclavage.

Il peut être requis que les objets contenus dans les sacs de transfert soient stérilisés avant d'être transférés dans l'enceinte étanche, notamment dans le domaine pharmaceutique. Les objets à stériliser peuvent être des flacons, des bouchons... la stérilisation des objets est réalisée alors que les objets sont dans le sac.

La stérilisation peut être obtenue soit par irradiation gamma, soit par la stérilisation à la vapeur par autoclavage.

La mise en œuvre de l'irradiation gamma requiert que le matériau de la bride soit compatible avec l'irradiation gamma, ce qui est le cas du PEHD et du polypropylène. La bride conserve ses dimensions lors de l'irradiation, afin d'assurer une connexion fiable avec la partie alpha.

Lorsque la stérilisation est réalisée par autoclavage, le matériau de la bride doit supporter des températures de l'ordre de 120°C-124°C, voire jusqu'à 134°C pour certaines stérilisations rapides, i.e. conserver ses dimensions afin d'assurer une connexion fiable avec la partie alpha. Or le PEHD et le polypropylène ne présentent pas cette propriété. Généralement la bride est dans ce cas réalisée en polycarbonate ou en polysulfone (PSU). En effet ces matériaux offrent une bonne stabilité dimensionnelle aux températures atteintes lors de l'autoclavage.

Cela implique donc de devoir réaliser des brides différentes et donc des sacs différents suivant le type de stérilisation. De plus le mode de fixation du contenant souple sur la bride diffère suivant le matériau de la bride. En effet, lorsque le contenant est par exemple réalisé à partir de feuilles formées d'un film tri-couche polyéthylène/EVOH/polyéthylène, il peut être soudé directement sur la bride en polyéthylène par l'intermédiaire de la couche en polyéthylène. Mais lorsque la bride est en polycarbonate ou en PSU, une soudure avec un contenant en PEHD n'est pas possible et un assemblage mécanique nécessitant un connecteur, un collier de serrage et un joint est requis, rendant l'assemblage long et demandant une attention importante pour éviter un assemblage défectueux.

La bride selon l'invention est à la fois compatible à une stérilisation par autoclavage, une stérilisation par irradiation gamma et une stérilisation par Oxyde d'Ethylène.

Sur la figure 3, on peut voir représentée la variation du module de cisaillement G en N/mm² en fonction de la température T en °C pour le PEHD et le COC grades 6013, 6015 et 6017. La gamme de température entre 120°C et 135°C est celle de l'autoclavage. On constate que le module de cisaillement du PEHD seul n'atteint pas cette plage alors que les modules de cisaillement des grades de COC 6013, 6015 et 6017 atteignent et dépassent la plage de température de 120°C à 135°C. Les grades de COC résistent donc mieux à la température.. La bride réalisée avec un matériau comportant du COC présente une tenue en température qui lui confère une stabilité dimensionnelle aux températures d'autoclavage.

La connexion baïonnette entre la bride du sac et la bride de la cellule assurant l'étanchéité du transfert reste effective et fiable, même après une étape d'autoclavage. La bride selon l'invention permet donc d'éviter de devoir recourir à des brides différentes suivant le type de stérilisation.

Comme cela a été mentionné ci-dessus, de préférence la porte est réalisée dans le même matériau que la bride, afin qu'elle présente également une bonne stabilité dimensionnelle, le cas échéant qu'elle se déforme dans le même sens que la bride, qu'elle résiste à la stérilisation par autoclavage. En effet la porte de la partie bêta est destinée à se connecter mécaniquement à la porte de la partie alpha de manière étanche, pour cela une bonne stabilité dimensionnelle est requise.

Différents exemples de conteneurs souples réalisables avec une bride selon l'invention vont maintenant être décrits.

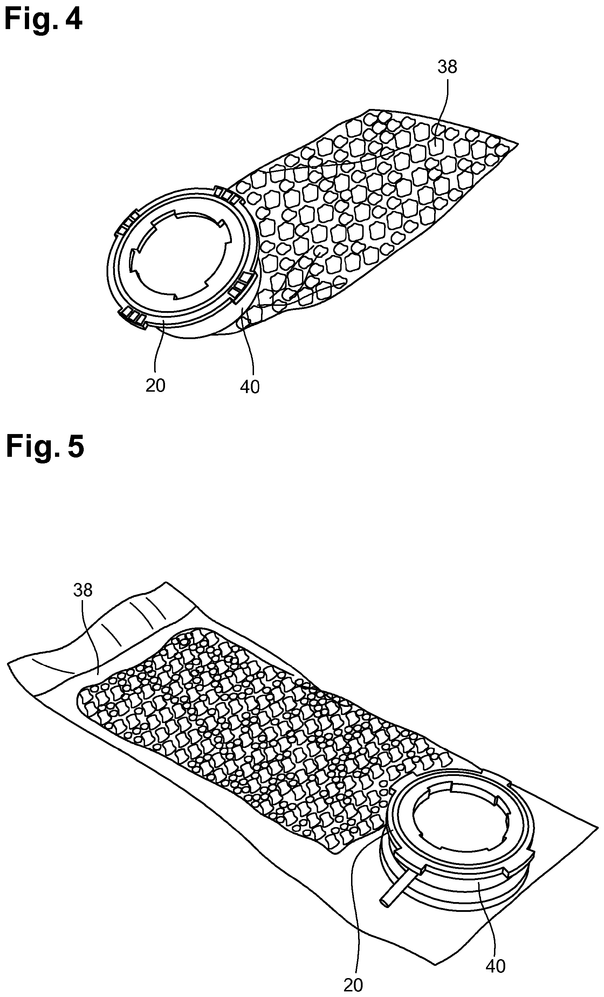

Sur la figure 4, on peut voir un exemple de conteneur souple comprenant une bride 20 selon l'invention, une porte, et un sac souple 12 comportant une extrémité fermée 38 et une extrémité ouverte 40 dont les bords sont fixés de manière étanche sur la bride. La bride est positionnée dans l'axe du sac.

Dans un autre mode de réalisation, l'extrémité 38 est ouverte, et est fermé par un dispositif mécanique rapporté.

Par exemple, le sac souple est réalisé à partir de film tri-couche polyéthylène-EVOH-polyéthylène, i.e. comportant deux couches de polyéthylène séparées par une couche de EVOH.

Le film peut être directement soudé sur la bride selon l'invention en soudant la couche de polyéthylène sur la bride, le matériau utilisé pour fabriquer la bride étant compatible pour une soudure avec le polyéthylène.

Ce sac est adapté à une stérilisation par rayons gamma.

Lorsque l'on souhaite effectuer une stérilisation par autoclavage ou Oxyde d'Ethylène, au moins une partie du contenant souple doit permettre le passage de la vapeur. Par exemple, le contenant souple comporte une face formée par une feuille en polyéthylène et une face formée par une feuille en un matériau perméable à la vapeur, tel que le textile non tissé de fibres de polyéthylène haute densité, par exemple commercialisé sous la marque Tyvek^{®}.

La bride 20 selon l'invention peut être soudée directement sur la feuille en polyéthylène, comme cela est représenté sur la figure 5.

Grâce à l'invention, la fabrication de sacs de transfert souples adaptés pour la stérilisation par autoclavage est simplifiée par rapport à la fabrication de sacs de transfert de l'état de la technique adaptés à la stérilisation par autoclavage. En effet, les sacs de transfert existants adaptés à l'autoclavage comportent une bride en polycarbonate ou en PSU qui est stable dimensionnellement aux températures d'autoclavage, le polyéthylène ne supportant pas les températures de stérilisation, et un système de fixation mécanique du contenant souple sur la bride car les films en PEHD ne se soudent pas sur le polycarbonate ou le PSU. Le système de fixation mécanique comporte un connecteur soudé sur le sac, un joint torique entre la bride et le connecteur et un collier de serrage du connecteur sur la bride. Grâce à l'invention, le système de fixation est supprimé. Le nombre de références à stocker est sensiblement réduit, le risque d'un montage défectueux et non étanche est réduit ainsi que la masse du sac. En outre le temps de fabrication est raccourci.

Dans un autre exemple, le sac est réalisé en un matériau bicouche polyéthylène-polyuréthane, la couche polyéthylène étant soudée sur la bride selon l'invention.

Par ailleurs, le COC présentant une grande pureté chimique, i.e. il ne contient pas de corps ou d'éléments étrangers ou ceux-ci sont à l'état de trace, son utilisation est donc particulièrement intéressante dans le domaine pharmaceutique. Les grades 6013, 6015 et 6017 TOPAS^{®} sont conformes au règlement européen de pharmacopée, ainsi que la pharmacopée des Etats-Unis (USP).

En outre, dans le cas de brides en COC ou en COC et PEHD, l'utilisation d'un colorant, en général blanc peut être évité, ce qui est participe à conserver un produit pur.

De plus, le fait de ne plus avoir à recourir à des moyens de fixation mécanique du contenant souple sur la bride, améliore la capacité de recyclage du produit. En effet, le sac de transfert selon l'invention comporte une bride, une porte, un joint et un contenant souple soudé sur la bride. Lorsque la bride est en COC ou en COC et PEHD ainsi que la porte, le tri lors du recyclage est sensiblement simplifié puisqu'il suffit de séparer le joint de la bride.

Une manche interne peut être soudée sur la bride simultanément au contenant souple.

La présente invention ne se limite pas aux brides pour sac de transfert souple, les brides peuvent équiper des conteneurs rigides, par exemple réalisés eux-mêmes en COC ou en un mélange de matériau comportant du COC.

En outre, un sac de transfert souple dans lequel le contenant souple serait fixé de manière étanche sur la bride selon l'invention par des moyens mécaniques, tel qu'un collier de serrage ne sort pas du cadre de la présente invention.

## Revendications

1. Bride pour conteneur de transfert étanche, la bride comportant un corps muni d'une première extrémité comprenant des moyens de connexion étanche destinés à coopérer avec un dispositif de transfert étanche, et d'une deuxième extrémité destinée à être connectée de manière étanche à un contenant, **caractérisé en ce que** ledit corps est réalisé en un matériau comportant au moins 50% en masse de polymère d'oléfine cyclique.

2. Bride selon la revendication 1, dans laquelle le matériau comporte du polymère d'oléfine cyclique et du polyéthylène haute densité, ou du polymère d'oléfine cyclique et du polypropylène.

3. Bride selon la revendication 1 ou 2, dans laquelle les moyens de connexion sont de type à baïonnette.

4. Ensemble de connexion étanche pour conteneur de transfert comportant une bride selon l'une des revendications 1 à 3, une porte (25) amovible montée dans la bride et un joint (24) monté sur la bride (20), le joint (24) étant configuré pour assurer l'étanchéité entre la bride (20) et la porte (25) et entre la bride (20) et le dispositif de transfert étanche.

5. Ensemble de connexion étanche selon la revendication 4, dans lequel la porte (25) est réalisée avec le même matériau que celui de la bride (20).

6. Conteneur de transfert étanche comportant un ensemble de connexion étanche selon la revendication 4 ou 5 et un contenant (12) fixé de manière étanche sur la deuxième extrémité de la bride (20).

7. Conteneur de transfert étanche selon la revendication 6, dans lequel le contenant comporte une enveloppe (16) souple soudée sur la deuxième extrémité de la bride (20).

8. Conteneur de transfert étanche selon la revendication 7, dans lequel l'enveloppe (16) comporte un film comportant au moins une couche en polyéthylène, ladite couche en polyéthylène étant soudée sur la deuxième extrémité de la bride (20).

9. Conteneur de transfert étanche selon la revendication 7, dans lequel l'enveloppe (16) comprend une paroi en un film comportant au moins une couche en polyéthylène, et une paroi en un matériau perméable à la vapeur, tel qu'un textile non tissé de fibres de polyéthylène haute densité, la paroi en un film comportant au moins une couche en polyéthylène étant soudée sur la deuxième extrémité de la bride.

10. Conteneur de transfert étanche selon la revendication 7, dans lequel le contenant (12) comporte une enveloppe en polyuréthane, et dans lequel une interface comportant une couche de polyéthylène et une couche de polyuréthane est disposée entre la bride et le contenant, de sorte que la couche en polyéthylène se trouve soudée sur la deuxième extrémité de la bride et la couche en polyuréthane se trouve soudée sur l'enveloppe.

11. Conteneur de transfert étanche selon l'une des revendications 7, 8 ou 10, dans lequel l'enveloppe (16) s'étend selon un axe longitudinal entre un fond fermé ou un fond ouvert et une ouverture et dans lequel les bords de l'ouverture sont soudés sur la bride dans l'axe.

12. Conteneur de transfert selon la revendication 11, dans lequel l'enveloppe (16) est formée par deux feuilles soudées bord à bord sauf au niveau de l'ouverture, les parties des deux feuilles délimitant l'ouverture étant soudées sur la bride.

## Patentansprüche

1. Flansch für einen dichten Transferbehälter, wobei der Flansch einen Körper mit einem ersten Ende aufweist, das dichte Verbindungsmittel umfasst, die dazu bestimmt sind, mit einer dichten Transfervorrichtung zusammenzuwirken, und einem zweiten Ende, das dazu bestimmt ist, dicht mit einem Behälter verbunden zu werden, **dadurch gekennzeichnet, dass** der Körper aus einem Material besteht, das mindestens 50 Massenprozent zyklisches Olefinpolymer aufweist.

2. Flansch nach Anspruch 1, wobei das Material zyklisches Olefinpolymer und hochdichtes Polyethylen oder zyklisches Olefinpolymer und Polypropylen aufweist.

3. Flansch nach Anspruch 1 oder 2, wobei die Verbindungsmittel vom Bajonetttyp sind.

4. Dichte Verbindungsbaugruppe für Transferbehälter, der einen Flansch nach einem der Ansprüche 1 bis 3, eine in dem Flansch montierte bewegliche Tür (25) und eine an dem Flansch (20) montierte Dichtung (24) aufweist, wobei die Dichtung (24) so eingerichtet ist, dass sie die Abdichtung zwischen dem Flansch (20) und der Tür (25) und zwischen dem Flansch (20) und der dichten Transfervorrichtung gewährleistet.

5. Dichte Verbindungsbaugruppe nach Anspruch 4, wobei die Tür (25) aus demselben Material wie der Flansch (20) hergestellt ist.

6. Dichter Transferbehälter, der eine dichte Verbindungsbaugruppe nach Anspruch 4 oder 5 und einen Behälter (12), der dicht an dem zweiten Ende des Flansches (20) befestigt ist, aufweist.

7. Dichter Transferbehälter nach Anspruch 6, wobei der Behälter eine weiche Hülle (16) aufweist, die an das zweite Ende des Flansches (20) geschweißt ist.

8. Dichter Transferbehälter nach Anspruch 7, wobei die Hülle (16) eine Folie mit mindestens einer Polyethylenschicht aufweist, wobei die Polyethylenschicht an das zweite Ende des Flansches (20) geschweißt ist.

9. Dichter Transferbehälter nach Anspruch 7, wobei die Hülle (16) eine Wand aus einer Folie mit mindestens einer Polyethylenschicht und eine Wand aus einem dampfdurchlässigen Material, wie einem Vliesstoff aus Polyethylenfasern hoher Dichte, umfasst, wobei die Wand aus einer Folie mindestens eine Polyethylenschicht aufweist, die an das zweite Ende des Flansches geschweißt ist.

10. Dichter Transferbehälter nach Anspruch 7, wobei der Behälter (12) eine Polyurethanhülle aufweist, und wobei eine Schnittstelle eine Polyethylenschicht aufweist und eine Polyurethanschicht zwischen dem Flansch und dem Behälter angeordnet ist, so dass die Polyethylenschicht auf dem zweiten Ende des Flansches verschweißt ist und die Polyurethanschicht auf der Hülle verschweißt ist.

11. Dichter Transferbehälter nach einem der Ansprüche 7, 8 oder 10, wobei sich die Hülle (16) entlang einer Längsachse zwischen einem geschlossenen Boden oder einem offenen Boden und einer Öffnung erstreckt und wobei die Ränder der Öffnung an dem Flansch in der Achse verschweißt sind.

12. Transferbehälter nach Anspruch 11, wobei die Hülle (16) durch zwei aneinander geschweißte Folien außer an der Öffnung gebildet ist, wobei die Teile der beiden Folien, die die Öffnung begrenzen, an den Flansch geschweißt sind.

## Claims

1. Flange for sealed transfer container, the flange including a body provided with a first end comprising means of sealed connection intended for cooperating with a sealed transfer device, and with a second end intended for being connected in a sealed manner to a container, **characterized in that** said body is made of a material including at least 50% by weight of cyclic olefin polymer.

2. Flange according to claim 1, wherein the material includes cyclic olefin polymer and high-density polyethylene, or cyclic olefin polymer and polypropylene.

3. Flange according to claim 1 or 2, wherein the means of connection are of the bayonet type.

4. Sealed connection assembly for transfer container including a flange according to one of claims 1 to 3, a removable door (25) mounted in the flange and a seal (24) mounted on the flange (20), the seal (24) being configured to provide the seal between the flange (20) and the door (25) and between the flange (20) and the sealed transfer device.

5. Sealed connection assembly according to claim 4, wherein the door (25) is made of the same material as that of the flange (20).

6. Sealed transfer container including a sealed connection assembly according to claim 4 or 5 and a container (12) fixed in a sealed manner on the second end of the flange (20).

7. Sealed transfer container according to claim 6, wherein the container includes a flexible jacket (16) welded on the second end of the flange (20).

8. Sealed transfer container according to claim 7, wherein the jacket (16) includes a film including at least one polyethylene layer, said polyethylene layer being welded on the second end of the flange (20).

9. Sealed transfer container according to claim 7, wherein the jacket (16) comprises a wall made of a film including at least one polyethylene layer, and a wall made of a material permeable to steam, such as a non-woven fabric of high-density polyethylene fibres, the wall made of a film including at least one polyethylene layer being welded on the second end of the flange.

10. Sealed transfer container according to claim 7, wherein the container (12) includes a jacket made of polyurethane, and wherein an interface including a layer of polyethylene and a layer of polyurethane is disposed between the flange and the container, in such a way that the polyethylene layer is welded on the second end of the flange and the polyurethane layer is welded on the jacket.

11. Sealed transfer container according to one of claims 7, 8 or 10, wherein the jacket (16) extends along a longitudinal axis between a closed bottom or an open bottom and an opening and wherein the edges of the opening are welded on the flange in the axis.

12. Transfer container according to claim 11, wherein the jacket (16) is formed by two edge-to-edge welded sheets except at the opening, the portions of the two sheets delimiting the opening being welded on the flange.
